# EUROPÄISCHE PATENTANMELDUNG

(11) **EP 3 243 913 A1**
(43) Veröffentlichungstag der Anmeldung: **15.11.2017**
(21) Anmeldenummer: 16169409.6
(22) Anmeldetag: 12.05.2016
(51) Int. Cl.: C21D 1/673, B21D 22/02, B32B 15/01, C22C 38/18, C22C 38/54, C21D 9/00

(54) **VERFAHREN ZUR HERSTELLUNG VON KORROSIONSGESCHÜTZTEN KRAFTFAHRZEUGBAUTEILEN**

(71) Anmelder: Benteler Automobiltechnik GmbH, 33102 Paderborn (DE)
(72) Erfinder: Frehn, Andreas, 33129 Delbrück (DE); Frost, Georg, 32839 Steinheim (DE); Nitschke, Christoph, 33175 Bad Lippspringe (DE); Pohl, Martin, 33184 Altenbeken (DE)
(74) Vertreter: Griepenstroh, Jörg

(57) **Zusammenfassung**

Die Erfindung betrifft ein Verfahren zur Herstellung von korrosionsgeschützten Kraftfahrzeugbauteilen (19) umfassend die Schritte: Bereitstellung eines Blechmaterials (1) aus Verbundmaterial mit einer Mittellage aus einer härtbaren Stahllegierung und zwei die Mittellage (3) nach außen begrenzenden Außenlagen (2, 4), optional Vorformen (5) des Blechmaterials (1) zu einer Vorform, Erwärmen (7) des Blechmaterials (1) oder der Vorform auf mindestens die Austenitisierungstemperatur des Materials der Mittellage (3), Einlegen des Blechmaterials (1) oder der Vorform in ein wenigstens bereichsweise gekühltes Presswerkzeug, Warmumformen des Blechmaterials (1) oder der Vorform nach dem Erwärmen, Presshärten (8) des erwärmten Blechmaterials oder der erwärmten Vorform zum Kraftfahrzeugbauteil (10), wobei die Außenlagen (2, 4) aus einer rostfreien Stahllegierung bestehen und das Erwärmen (7) des Blechmaterials (1) in einer Heizeinrichtung unter Umgebungsluftbedingungen durchgeführt wird.

## Beschreibung

Die Erfindung betritt ein Verfahren zur Herstellung korrosionsgeschützter Kraftfahrzeugbauteile, insbesondere crashrelevanter Karosserie- oder Fahrwerkbauteile.

Seit vielen Jahren ist das Herstellen von crashrelevanten Karosseriebauteilen durch Warmumformen und Presshärten bekannt. Es wird dabei Blechmaterial aus einem härtbaren Stahlmaterial entweder vorgeformt und anschließend zum Zwecke der Austenitisierung erwärmt oder sofort im unverformten Zustand erwärmt. Anschließend erfolgt ein Transfer in ein gekühltes Presswerkzeug und das eigentliche Warmumformen und Presshärten, wobei im Fall der Vorformung von einem indirekten Prozess gesprochen wird und beim Warmformen nur noch eine geringfügige Umformung, ein sogenanntes Kalibrieren, stattfindet. Im Falle der direkten Erwärmung des Blechmaterials wird auch vom direkten Warmformen gesprochen.

Die DE 10 2014 112 448 A1 beschreibt ein Verfahren zum Herstellen von korrosionsgeschützten crashrelevanten Stahlblechteilen aus einem Blechmaterial mit Aluminium-Siliziumbeschichtung. Das Blechmaterial aus einer härtbaren Stahllegierung wird als Blechplatinen verarbeitet und vor oder nach dem Vereinzeln einer Wärmebehandlung zum Zwecke der Legierungsschichtausbildung unterzogen und die somit durchlegierte Blechplatine anschließen zur Austenitisierung erneut erwärmt, warmgeformt und pressgehärtet. Die Beschichtung dient dem Schutz vor Verzunderung während der Wärmebehandlung und bietet Schutz vor Korrosion des Stahlblechbauteils. Nachteilig ist, dass die Beschichtung einer aufwändigen speziellen Wärmebehandlung unter bestimmen Prozessbedingungen unterzogen werden muss.

Die DE 10 2008 022 709 A1 offenbart zum einen korrosionsgefährdete Kraftfahrzeugbauteile aus einem Verbundmaterial, wobei zum Schutz vor Korrosion vorgeschlagen wird, entweder die Blechbauteile oder das Verbundmaterial metallisch oder organisch zu beschichten oder aber eine Kombination von höchstfesten kaltumformbaren Stahllegierungen in den Außenlagen mit Eisen-Mangan-Stahl in der Mittellage zu wählen. Zum anderen werden crashrelevante Karosseriebauteile beschrieben, welche mikrolegierte, duktilere Außenlagen und eine Mittellage aus härtbaren Borstahl des Typs 22MnB5 aufweisen sollen.

Davon ausgehend besteht die Aufgabe der Erfindung darin, ein wirtschaftlicheres Verfahren zur Herstellung von qualitativ besseren und zuverlässigeren Kraftfahrzeugbauteilen mit hervorragendem Korrosionsschutz bereitzustellen.

Diese Aufgabe wird erfindungsgemäß durch die Merkmale des Anspruchs 1 gelöst. Die Merkmale der davon abhängigen Unteransprüche beschreiben vorteilhafte Fortbildungen der Erfindung.

Erfindungsgemäß wird ein Verfahren zur Herstellung von korrosionsgeschützten Kraftfahrzeugbauteilen vorgeschlagen, welches folgende Verfahrensschritte umfasst:
- Bereitstellung eines Blechmaterials mit einer Mittellage aus einer härtbaren Stahllegierung und zwei die Mittellage nach außen begrenzenden Außenlagen,
- Optionales Vorformen des Blechmaterials zu einer Vorform,
- Erwärmen des Blechmaterials oder der Vorform auf mindestens die Austenitisierungstemperatur des Materials der Mittellage,
- Einlegen des Blechmaterials oder der Vorform in ein wenigstens bereichsweise gekühltes Presswerkzeug,
- Warmumformen des Blechmaterials nach dem Erwärmen,
- Presshärten des Blechmaterials oder der Vorform zum Kraftfahrzeugbauteil.

Die Erfindung ist dadurch gekennzeichnet, dass die Außenlagen aus einer rostfreien Stahllegierung bestehen und das Erwärmen des Blechmaterials in einer Heizeinrichtung unter Umgebungsluftbedingungen durchgeführt wird. Die Verwendung der Außenlagen bringt diverse Vorteile mit sich. So kann etwa auf eine sonst übliche metallische Beschichtung zum Zunder- und Korrosionsschutz verzichtet werden, do dass keine Ablagerungen der metallischen Beschichtung am Umformwerkzeug entstehen. Zudem lässt sich das Blechmaterial im indirekten Warmformprozess auch kalt vorformen, was das Einsatzspektrum an möglichen Kraftfahrzeugbauteilen steigert, hin zu Bauteilen mit höherer geometrischer Komplexität und höheren Umformgraden. Auch hier bereiten übliche Korrosionsbeschichtungen Probleme.

Erfindungsgemäß wird das Erwärmen des Blechmaterials in einer Heizeinrichtung unter Umgebungsluftbedingungen durchgeführt. Im Rahmen der Erfindung bedeutet das Erwärmen unter Umgebungsluftbedingungen, dass in der Heizeinrichtung in ihrer Zusammensetzung normale, der Produktionsumgebung entsprechende Luft vorgesehen ist, welche sich lediglich durch eine höhere Temperatur und gegebenenfalls höheren Druck von der Luft der Produktionsumgebung unterscheidet. Es wird somit erreicht, dass während es Erwärmens auf Austenitisierungstemperatur keine aufwendige Steuerung oder Regelung der der Atmosphäre in der Heizeinrichtung notwendig ist. Stattdessen kann das Kraftfahrzeugbauteil ressourceneffizent, insbesondere ohne Schutzgas und ohne Taupunktregulierung der Zuluft erwärmt werden.

Erfindungsgemäß liegt das Blechmaterial als Blechband oder als endkonturnah zugeschnittene beziehungsweise vereinzelte Blechplatine vor. Der Zuschnitt kann auch das Einbringen von Löchern beinhalten und wird bevorzugt vor einem möglichen Vorformen durchgeführt. Es ist im Falle des indirekten Warmformprozesses auch möglich, dass nach dem Vorformen des Blechmaterials zur Vorform ein weiterer, der Endkontur des fertig geformten Kraftfahrzeugbauteils im Wesentlichen entsprechenden Beschnitt erfolgt, bevor die Vorform auf Austenitisierungstemperatur erwärmt wird.

Als ferritisch rostfreie Stahllegierung hat sich besonders vorteilhaft die Verwendung einer zunderbeständige Legierung erwiesen, die neben erschmelzungsbedingten Verunreinigungen und Eisen (Fe) folgende Legierungsbestanteile in Gewichtprozent (Gew.-%) umfasst:
- Kohlenstoff (C): 0,08 % bis 0,16 %
- Silizium (Si): 0,5 % bis 1,8 %
- Mangan (Mn): 0,8 % bis 1,4 %
- Chrom (Cr): 13,0 % bis 22,0 %
- Aluminium (Al): 0,5 % bis 1,5 %
- Phosphor (P): maximal 0,06 %
- Schwefel (S): maximal 0,02 %.

Während Chrom in den Außenlagen die Hitzebeständigkeit des Blechmaterials und damit eine zunderfreie Oberfläche bei der Erwärmung und Warmumformung sicherstellt, sorgt die härtbare Stahllegierung der Mittellage für ein Höchstmaß an Zugfestigkeit. Zudem neigen Außenlagen aus ferritisch rostfreien Stahllegierungen weniger zur Anreicherung von Wasserstoff während des Erwärmens. Ein weiterer Vorteil besteht darin, dass auch bei einer Störung der Presse oder anderen dem Erwärmen nachgelagerten Prozessschritten eine mögliche, längere Zeitdauer in der Heizeinrichtung unkritisch bleibt für das Mikrogefüge des Blechmaterials. Durch die ferritische Gefügestruktur der Außenlagen in Verbindung mit einer insbesondere ferritisch-perlitischem Gefügestruktur der Mittellage ist eine optimale stoffschlüssige Verbindung auch während der Umform- und Wärmebehandlungsschritten gewährleistet.

Es kann vorgesehen werden, dass das Blechmaterial eine Mittellage aus einer härtbaren Stahllegierung umfassend Kohlenstoff zwischen 0,07 und 0,45 Gew.-% und Bor zwischen 0,0005 und 0,0100 Gew.-% aufweist.

Kohlenstoff dient der Steigerung der Festigkeit infolge einer Austenit-Martensit-Umwandlung. Zudem senkt es die kritische Abkühlgeschwindigkeit, so dass keine Wasserhärtung erfolgen muss, sondern ein Presshärten ermöglicht wird, um martensitisches Gefüge zu erzeugen. Bor dient ebenfalls der Absenkung der kritischen Abkühlgeschwindigkeit und erhöht damit die Härtbarkeit der Mittellage.

Als härtbare Stahllegierung eignet sich besonders ein Mangan-Bor-Stahl wie zum Beispiel 16MnB5, bevorzugt aber 22MnB5 oder alternativ 38MnB5 und 42MnB5. Insbesondere können härtbare Stahllegierungen mit einem Kohlenstoffgehalt größer gleich 0,27% Gewichtsprozent verwendet werden, beispielsweise MBW 1900. Diese Legierungen sind zu spröde für ein direktes Warmformen und Presshärten, da die für eine Rissbildung und Umformbarkeit entscheidenden äußeren Randbereiche des Blechmaterials eine hohe Härte aufweisen. Aufgrund der Außenlagen aus einer ferritisch rostfreien Stahllegierung ist deren Verarbeitung mittels Warmformen und Presshärten auch im direkten Warmformprozess möglich. Insbesondere durch die höhere Duktilität der Außenlagen erhöhen sich die Bruchdehnung sowie der Biegewinkel sowohl beim Warmformen als auch am pressgehärteten Kraftfahrzeugbauteil.

Im einfachsten Fall kann das Erwärmen des gegebenenfalls vorgeformten Blechmaterials durch Brennerflammen, Heizstrahlrohren, oder Flächeninduktoren auf einer lediglich vor Fremdeinwirkung geschützten Förderstrecke in einer Produktionshalle erfolgen.

Bevorzugt wird das Erwärmen des Blechmaterials jedoch in einem Innenraum der Heizeinrichtung durchgeführt. Der Innenraum ist nach oben und unten sowie zu den Seiten von Wänden beziehungsweise von einer Decke und Boden während des Erwärmens umschlossen, wobei Ein- und Ausgangsöffnungen vorhanden sind, die dauerhaft geöffnet sind oder verschlossen werden können. Damit wird eine thermische Isolierung von der Umgebungsluft und erreicht und eine Wärmeabstrahlung vom erwärmten Blechmaterial an die Umgebung verringert oder unterbunden.

Weiterhin kann vorgesehen sein, dass der Innenraum eine Temperatur aufweist, die zwischen 50 Kelvin und 350 Kelvin oberhalb der Austenitisierungstemperatur der Mittellage des Blechmaterials eingestellt wird. Dadurch wird bewirkt, dass die Erwärmung in besonders kurzer Zeit durchgeführt werden kann. Aufgrund einer daraus resultierenden Verkürzung der Erwärmungszeit pro Blechmaterial kann beispielsweise die von dem Blechmaterial zu durchlaufende Strecke in einem Durchlaufofen verkürzt werden, was auch den Raumbedarf in der Fabrik reduziert. Die Temperatur des Innenraums von maximal 350 Kelvin oberhalb der Austenitisierungstemperatur ist so gewählt, dass kein übermäßiger Mehraufwand für die Isolierung der Heizeinrichtung erforderlich ist.

Bevorzugt wird die Temperatur im gesamten Innenraum homogen eingestellt. Die Einstellung dieser hohen Temperatur im Innenraum ist insbesondere in Kombination mit der Verwendung des erfindungsgemäßen Blechmaterials mit einer rostfreien, insbesondere ferritischen Außenlage vorteilhaft. Im Gegensatz dazu ist eine überhöhte Temperatur bei herkömmlichen metallisch beschichteten Blechmaterial nicht möglich, da bei (Vor-)Beschichtungen auf Zinkbasis anfänglich eine sehr geringe Erwärmungsrate zur Verhinderung des Verdampfens der Beschichtung notwendig ist, bis sich eine Zinkoxid-Schutzhaut gebildet hat, und eine zu schnelle Erwärmung einer AlSi-Beschichtung die Lackierbarkeit auf Ebene des pressgehärteten Kraftfahrzeugteil oder auf Ebene der Rohbaukarosserie verschlechtert wird.

Alternativ kann vorgesehen sein, dass die Temperatur des zwischen Innenraums zwischen 50 Kelvin und 350 Kelvin oberhalb der Austenitisierungstemperatur nur in einem Raumabschnitt vorliegt, der mit der Lage eines Flächenabschnitts des flachen oder vorgeformten Blechmaterials korrespondiert, welcher beim Presshärten anschließend gehärtet wird. Im übrigen Raum des Innenraums kann eine davon niedrigere Temperatur, insbesondere eine Temperatur unterhalb der Austenitisierungstemperatur eingestellt werden, um am pressgehärteten Bauteil einen ungehärteten oder weniger gehärteten Flächenabschnitt zu erhalten.

Es kann vorgesehen werden, dass gleichzeitig mehrere Blechmaterialien oder Vorformen in der Heizeinrichtung erwärmt werden. Bevorzugt wird das Erwärmen in einer Heizeinrichtung mit mehreren Aufnahmeplätzen zum gleichzeitigen Erwärmen mehrerer Blechmaterialien oder Vorformen durchgeführt. Dabei kann es sich vorteilhafterweise um einen konventionellen Ofen, insbesondere einen Durchlaufofen beziehungsweise Rollenherdofen oder einen Mehretagenofen handeln. Gleichzeitig bedeutet nicht, dass der Beginn oder das Ende des Erwärmens beispielsweise zweier Blechmaterialien oder zweier Vorformen zwangsläufig zusammenfallen müssen. Vielmehr kann gleichzeitig in diesem Zusammenhang auch bedeuten, dass sich die Dauer des Erwärmens zweier oder mehrerer Blechmaterialien in der Heizeinrichtung zeitlich lediglich überlappen.

Im Rahmen der Erfindung ist ein Aufnahmeplatz entweder eine dem Blechmaterial beziehungsweise einer Blechplatine oder Vorform eindeutig zugeordnete Lage im Raum. Als Aufnahmeplatz gilt aber auch, wenn das Blechmaterial zwar durch ein Transportmittel oder Fördermittel aufgenommen ist, sich aber durch die Heizeinrichtung während des Erwärmens bewegt beziehungsweise bewegt wird.

Vorteilhaft ist dabei, dass konventionelle Ofentechnik im erfindungsgemäßem Verfahren durch die rostfreien Außenlagen gegenüber dem Einsatz metallischer, insbesondere AlSi-beschichteter Blechmaterial mit deutlich reduziertem Instandhaltungsaufwand, reduzierter Länge oder erhöhter Durchlaufgeschwindigkeit betrieben werden kann. Der niedrigere Instandhaltungsaufwand ist dadurch begründet, dass keine Zersetzungsprozesse durch die Aluminium-Siliziumbeschichtung an keramischen Ofenrollen der Heizeinrichtung stattfinden, welche aufgrund der hohen Austenitisierungstemperatur zumeist verwendet werden.

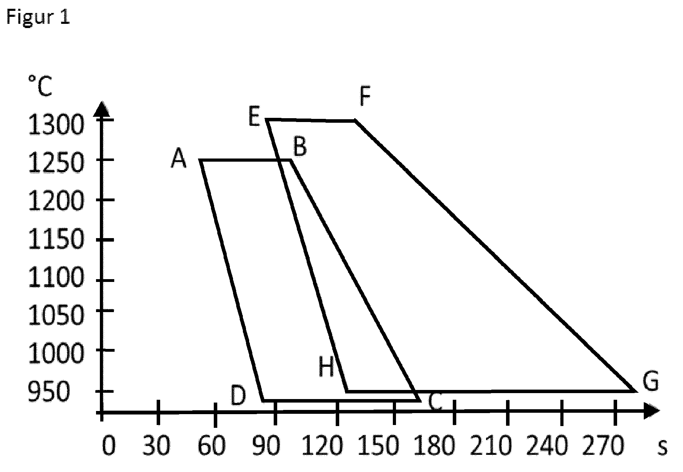

Bevorzugt wird das Erwärmen des Blechmaterials oder der Vorform in einer Zeit durchgeführt, welche für Blechmaterial mit einer Gesamtdicke von 0,7 bis 1,5 Millimeter durch die Fläche ABCD in Figur 1 sowie für Blechmaterial mit einer Gesamtdicke von 1,6 bis 3,0 Millimeter durch die Fläche EFGH in Figur 1 definiert ist.

Alternativ wird das Erwärmen des Blechmaterials in einer Zeit durchgeführt, welche für Blechmaterial mit einer Gesamtdicke von 0,7 bis 1,5 Millimeter zwischen 60 Sekunden und 180 Sekunden sowie für Blechmaterial mit einer Gesamtdicke von 1,6 bis 3,0 Millimeter zwischen 90 und 270 Sekunden beträgt. Diese Erwärmungszeit liegt beträchtlich unterhalb der für metallisch vorbeschichtete Blechmaterialien erforderlichen Zeit, und bewirkt neben geringerem Raumbedarf niedrigere Wärmeverluste, ein feinkörnigeres Mikrogefüge des Blechmaterials insbesondere der Mittellage.

Bevorzugt wird das Verbundmaterial durch ein Schmiedeverfahren oder ein heißisostatisches Pressverfahren oder ein Warmwalzverfahren hergestellt. Dabei werden bevorzugt jeweils drei Platten den späteren Lagen zugeordnet und gereinigt, zu einem Plattenpaket übereinander angeordnet, fixiert und metallurgisch stoffschlüssig verbunden. Die Fixierung kann einen ersten lokalen Stoffschluss umfassen, oder auch einen Formschluss. Die metallurgische Verbindung der Platten wird über die gesamte Fläche der Platten durch eines der genannten Verfahren durchgeführt. Die Verfahren können auch mehrstufig ausgeführt oder kombiniert werden. Im Ergebnis wird ein nicht zerstörungsfrei trennbarerer Materialverbund erzeugt.

Alternativ ist es vorstellbar, auf die Platte, welche der späteren Mittellage zugeordnet ist, beidseitig flächig mittels Auftragschweißen den Werkstoff der späteren Außenlagen aufzubringen. Durch das Schweißen ergibt sich ebenfalls eine metallurgisch stoffschlüssige Verbindung.

Dieser Materialverbund wird dann bevorzugt ausgewalzt, insbesondere warmgewalzt und optional zur weiteren Dickenreduktion kaltgewalzt, so dass schließlich das Blechmaterial bevorzugt als Blechband entsteht. Gegenüber einem nachträglichen Plattieren beziehungsweise Cladding oder Beschichtungen von metallischen Außenlagen auf dem Blechmaterial oder gar auf dem pressgehärteten Kraftfahrzeugbauteil stellen die vorgeschlagenen Herstellverfahren für das Blechmaterial als Verbundmaterial einen großen Sprung in der Wirtschaftlichkeit, Einhaltung von Abmessungstoleranzen und dauerhaftem Korrosionsschutz ohne Gefahr der Unterwanderung dar.

Weiterhin kann vorgesehen werden, dass Kraftfahrzeugbauteil mechanisch bearbeitet, insbesondere endbeschnitten und/oder gelocht wird. Die mechanische Bearbeitung wird nach dem Presshärten durchgeführt. Durch die ferritisch rostfreien Außenlagen ist es möglich, trotz gehärteter Mittellage ein mikrorissfreies, nicht rissgefährdetes Kraftfahrzeugbauteil zu erzeugen, wobei im Schnittbereich kein oder nur ein zu vernachlässigender Bruchanteil vorliegt. Eine gleichwertige Qualität des Endbeschnitts ist bei herkömmlichen korrosionsgeschützten und gehärteten Blechbauteilen nicht möglich. Besonders bevorzugt wird der Endbeschnitt als Hartbeschnitt durchgeführt, was in einer einfachen Pressvorrichtung oder Lochstanzvorrichtung möglich ist.

Erfindungsgemäß kann vorgesehen werden, dass eine der Außenlagen eine Dicke kleiner 20 Prozent, insbesondere kleiner 10 Prozent der Gesamtdicke des Blechmaterials aufweist. Eine Mindestdicke einer Außenlage von 50 Mikrometern ist prozessbedingt allerdings erforderlich. Eine mehr als 20-prozentige Dicke einer Außenlage zur Gesamtdicke des Blechmaterials bewirkt allenfalls marginale weitere Verbesserungen der Zunderbeständigkeit sowie der Korrosionsbeständigkeit oder der Steinschlagschutzfunktion am eingebauten Kraftfahrzeugbauteil. Ein Korrosionsangriff durch Unterwanderung sowie in Schweißbereichen von Punktschweißverbindungen oder Lichtbogenschweißnähten wird durch eine gute Durchmischung der Werkstoffe von Mittellage und Außenlagen vermieden. Beim Lichtbogenschweißen können zudem Schweißzusatzstoffe in Drahtform oder Pulverform zugeführt werden, die eine gute Durchmischung unterstützen.

Bevorzugt ist bei Kraftfahrzeugbauteilen mit erhöhter Steinschlaggefahr oder bei unterschiedlicher Beanspruchung der beiden Bauteilseiten beziehungsweise der beiden Außenlagen vorgesehen werden, dass die stärker beanspruchte Außenlage dicker ausgebildet wird als die gegenüber liegende Außenlage. So kann beispielsweise einseitig eine Dicke von nicht mehr als 5 Prozent der Dicke des Blechmaterials gewählt werden, während die andere Außenlage eine Dicke von 15 Prozent der Gesamtdicke des Blechmaterials aufweist.

Es ist erfindungsgemäß auch möglich, dass zwei verschiedene rostfreie Stahllegierungen für die Außenlagen eingesetzt werden, wobei sich beide in Ihrer Zusammensetzung hinsichtlich der Gewichtsanteile der Legierungselemente selbst unterscheiden.

Erfindungswesentlich ist, dass ein Blechmaterial ohne metallische Beschichtung eingesetzt wird. Im Rahmen der Erfindung ist unter metallischer Beschichtung insbesondere eine aluminiumbasierte oder zinkbasierte Vorbeschichtung des Blechmaterials oder eine Doppelbeschichtung mit beiden Elementen zu verstehen, die typischerweise im Stand der Technik als Korrosionsschutz, Oxidationsschutz und vor allem als Zunderschutz dienen. Die Vorteile der im erfindungsgemäßen Verfahren als überlegene Alternative dazu eingesetzten Außenlagen des Verbundmaterials sind neben den oben bereits benannten wie folgt. Bei der Erwärmung kann auf eine zeitaufwendige Durchlegierung des Blechmaterials in der Heizeinrichtung verzichtet werden, da bereits bei der Herstellung des Verbundmaterials eine metallurgische stoffschlüssige Verbindung zwischen Außenlagen und Mittellage erzeugt wird. Am fertigen Kraftfahrzeugbau gibt es keine Rissgefahr bei einem Hartbeschnitt des pressgehärteten Kraftfahrzeugbauteils. Es besteht keine Gefahr einer Flüssigmetallversprödung durch Eisen-Zink-Phasen im Mikrogefüge wie bei zinkbeschichteten Blechmaterialien.

Weiterhin kann vorgesehen werden, dass ein Blechmaterial verwendet wird, welches durch ein Verfahren zum flexiblen Walzen hergestellt wurde und Bereiche reduzierter Blechdicke aufweist. Flexible Walzverfahren sind hinlänglich bekannt, um Blechmaterial mit verschiedenen Blechdicken zu erzeugen, welche dabei in Walzrichtung eingestellt werden. Quer zur Walzrichtung bleibt die Blechdicke dabei konstant. Damit kann dem Leichtbauziel im Fahrzeugbau weiter Rechnung getragen werden. Durch die rostfreie Außenlage wird zudem verhindert, dass ein schädlicher Wasserstoffeintrag während des Erwärmens in die später zu härtende Mittellage stattfindet. Die Außenlage dient dabei als Sperrschicht.

Es folgt eine kurze Beschreibung der Erfindung anhand zweier Figuren.
Figur 1 zeigt für zwei verschiedene Gesamtdicken des Blechmaterials jeweils ein vorteilhaftes Zeit-Temperatur-Fenster. Bei niedrigerer Gesamtdicke von 0,7 bis 1,5 Millimetern wird abhängig von der Temperatur des Innenraums der Heizeinrichtung, welche auf der Ordinatenachse aufgetragen ist, ein Prozessfenster durch die Punkte ABCD definiert. Für eine größere Dicke des Blechmaterials im Bereich von 1,5 bis 3 Millimetern wird ein weiteres Prozessfenster durch die Punkte EFGH definiert, wobei beide Prozessfenster sich teilweise überlappen. Erkennbar ist, dass die Erwärmungszeit mit größer werdender Temperatur des Innenraums kürzer wird, mithin das Blechmaterial die Heizeinrichtung schneller verlassen kann. Bei größerer Gesamtdicke erhöht sich leicht die erforderliche Erwärmungszeit. Bei Einhaltung dieser Prozessfenster kann das Herstellungsverfahren besonders wirtschaftlich und mit optimaler resultierender Produktqualität gewährleistet werden.

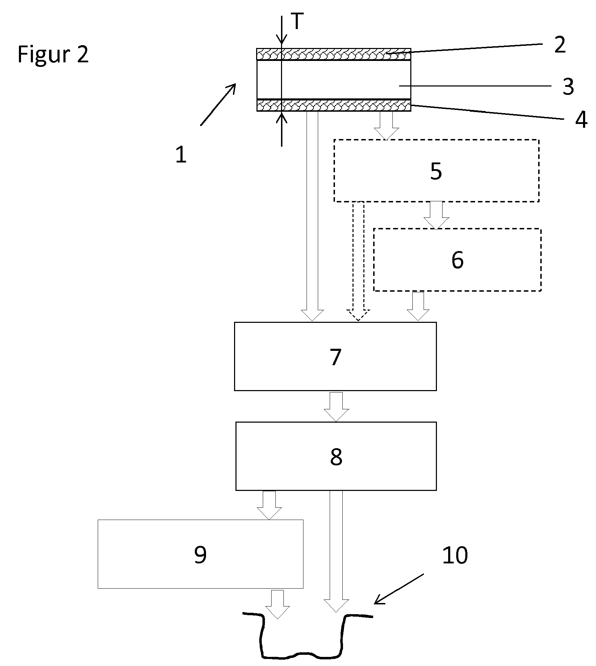

Figur 2 zeigt den erfindungsgemäßen Verfahrensablauf schematisch als indirektes und direkten Warmformen und Presshärten.

Zunächst wird ein Blechmaterial 1 mit einer Mittellage 3 und zwei die Mittellage 3 nach außen begrenzenden Außenlagen 2,4 bereitgestellt. Das Blechmaterial 1 ist ein Verbundmaterial und weist eine Gesamtdicke T auf. Anschließend erfolgt im direkten Warmformprozess ein Erwärmen 7 auf mindestens Austenitisierungstemperatur des Materials der Mittellage 3. Das erwärmte Blechmaterial 1 wird sodann in ein gekühltes Presswerkzeug eingelegt. Im Presswerkzeug erfolgt das Warmformen. Während des Warmformens und wenn das Presswerkzeug vollständig geschlossen ist erfolgt das Presshärten 8 des umgeformten Blechmaterial durch den Kontakt mit dem kühlen beziehungsweise gekühlten Presswerkzeug. Abschließend kann am pressgehärteten Kraftfahrzeugbauteil 10 ein Endbeschnitt 9 erfolgen und können Löcher eingebracht werden, insbesondere durch Hartschneiden. Gestrichelt ist der indirekte Warmformprozess dargestellt, wobei dieser sich durch einen zusätzlichen Schritt des Vorformens 5 des Blechmaterials 1 und einen optionalen Beschnitt 6 der Vorform vom direkten Warmformprozess unterscheidet. Der Endbeschnitt 9 kann in diesem Fall vorteilhafterweise entfallen.

Mit erfindungsgemäßem Verfahren lassen sich Kraftfahrzeugbauteile herstellen, welche als crashrelevante Blechbauteile Einsatz finden, insbesondere im so genannten Nassbereich der Karosserie oder des Fahrwerks. Der Nassbereich ist durch erhöhte Witterungseinflussnahme während des Betriebs des Kraftfahrzeugs gekennzeichnet.

Neben der hervorragenden Korrosionsbeständigkeit durch die metallurgisch stoffschlüssig verbundenen Außenlagen mit der Mittelage ist zudem ein überlegener integrierter Steinschlagschutz gewährleistet, der vor allem Bauteilen des Unterbodens wie Querträger, Getriebetunnel, Traktionsbatteriebehälter und Kraftstoffbehälter sowie des Vorderwagens, beispielsweise untere Längsträger, vorderer Hilfsrahmen beziehungsweise Motorträger und vielen Fahrwerkkomponenten wie Lenker, Achsen, Achsträgern zu Gute kommt.

### Bezugszeichen:

- 1 -: Blechmaterial
- 2 -: Außenlage
- 3 -: Mittellage
- 4 -: Außenlage
- 5 -: Vorformen
- 6 -: Beschnitt
- 7 -: Erwärmen
- 8 -: Warmformen und Presshärten
- 9 -: Endbeschnitt
- 10-: Kraftfahrzeugbauteil
- T -: Gesamtdicke

## Patentansprüche

1. Verfahren zur Herstellung von korrosionsgeschützten Kraftfahrzeugbauteilen (10), umfassend folgende Verfahrensschritte:
• Bereitstellung eines Blechmaterials (1) aus Verbundmaterial mit einer Mittellage (3) aus einer härtbaren Stahllegierung und zwei die Mittellage (3) nach außen begrenzenden Außenlagen (2, 4),
• Optional Vorformen (5) des Blechmaterials (1) zu einer Vorform,
• Erwärmen (7) des Blechmaterials (5) oder der Vorform auf mindestens die Austenitisierungstemperatur des Materials der Mittellage (3),
• Einlegen des Blechmaterials (5) oder der Vorform in ein wenigstens bereichsweise gekühltes Presswerkzeug,
• Warmumformen des Blechmaterials oder der Vorform nach dem Erwärmen,
• Presshärten (8) des erwärmten Blechmaterials oder der erwärmten Vorform zum Kraftfahrzeugbauteil,
**dadurch gekennzeichnet, dass**
die Außenlagen (2, 4) aus einer rostfreien Stahllegierung bestehen und das Erwärmen (7) des Blechmaterials (1) in einer Heizeinrichtung unter Umgebungsluftbedingungen durchgeführt wird.

2. Verfahren nach Anspruch 1 **dadurch gekennzeichnet, dass** das Erwärmen (7) des Blechmaterials in einem Innenraum (1) der Heizeinrichtung durchgeführt wird.

3. Verfahren nach Anspruch 2, **dadurch gekennzeichnet, dass** der Innenraum eine Temperatur aufweist, die zwischen 50 Kelvin und 350 Kelvin oberhalb der Austenitisierungstemperatur der Mittellage (3) des Blechmaterials (1) eingestellt wird.

4. Verfahren nach einem der vorherigen Ansprüche, **dadurch gekennzeichnet, dass** gleichzeitig mehrere Blechmaterialien (1) oder Vorformen in der Heizeinrichtung erwärmt werden.

5. Verfahren nach einem der vorherigen Ansprüche, **dadurch gekennzeichnet, dass** das Erwärmen (7) des Blechmaterials (1) oder der Vorform in einer Zeit durchgeführt wird, welche für Blechmaterial (1) mit einer Gesamtdicke (T) von 0,7 bis 1,5 mm zwischen 60 s und 180 s sowie für Blechmaterial (1) mit einer Gesamtdicke (T) von 1,6 bis 3,0 mm zwischen 90s und 270 s beträgt.

6. Verfahren nach einem der vorherigen Ansprüche, **dadurch gekennzeichnet, dass** das Blechmaterial (1) hergestellt wird durch ein Schmiedeverfahren, oder ein heißisostatisches Pressverfahren, oder ein Warmwalzverfahren oder ein Auftragsschweißverfahren.

7. Verfahren nach einem der vorherigen Ansprüche, **dadurch gekennzeichnet, dass** das Kraftfahrzeugbauteil mechanisch bearbeitet, insbesondere endbeschnitten und/oder gelocht, bevorzugt hartbeschnitten wird.

8. Verfahren nach einem der vorherigen Ansprüche, **dadurch gekennzeichnet, dass** das Blechmaterial (1) eine Mittellage (3) aus einer Stahllegierung umfassend Kohlenstoff zwischen 0,07 und 0,45 Gew.-% und Bor zwischen 0,0005 und 0,0100 Gew.-% aufweist.

9. Verfahren nach einem der vorherigen Ansprüche, **dadurch gekennzeichnet, dass** das Blechmaterial (1) eine Außenlage (2, 4) aus einer ferritisch, rostfreien Stahllegierung, insbesondere einer zunderbeständigen Legierung, folgende Legierungsbestanteile in Gewichtprozent (Gew.-%) umfasst:
• Kohlenstoff (C): 0,08 % bis 0,16 %
• Silizium (Si): 0,5 % bis 1,8 %
• Mangan (Mn): 0,8 % bis 1,4 %
• Chrom (Cr): 13,0 % bis 22,0 %
• Aluminium (Al): 0,5 % bis 1,5 %
• Phosphor (P): maximal 0,06 %
• Schwefel (S): maximal 0,02 %
Rest Eisen (Fe) und erschmelzungsbedingten Verunreinigungen

10. Verfahren nach einem der vorherigen Ansprüche, **dadurch gekennzeichnet, dass** eine der Außenlagen(2, 4) eine Dicke kleiner 20%, insbesondere kleiner 10% der Gesamtdicke (T) des Blechmaterials (1) aufweist.

11. Verfahren nach einem der vorherigen Ansprüche, **dadurch gekennzeichnet, dass** ein Blechmaterial (1) ohne metallische Beschichtung eingesetzt wird.

12. Verfahren nach einem der vorherigen Ansprüche, **dadurch gekennzeichnet, dass** ein Blechmaterial (1) verwendet wird, welches durch ein Verfahren zum flexiblen Walzen hergestellt wurde und Bereiche reduzierter Blechdicke aufweist.

## Geänderte Patentansprüche

### Geänderte Patentansprüche gemäss Regel 137(2) EPÜ.

1. Verfahren zur Herstellung von korrosionsgeschützten Kraftfahrzeugbauteilen (10), umfassend folgende Verfahrensschritte:
• Bereitstellung eines Blechmaterials (1) aus Verbundmaterial mit einer Mittellage (3) aus einer härtbaren Stahllegierung und zwei die Mittellage (3) nach außen begrenzenden Außenlagen (2, 4), wobei die Außenlagen (2, 4) aus einer rostfreien Stahllegierung bestehen und
• Optional Vorformen (5) des Blechmaterials (1) zu einer Vorform,
• Erwärmen (7) des Blechmaterials (5) oder der Vorform auf mindestens die Austenitisierungstemperatur des Materials der Mittellage (3),
• Einlegen des Blechmaterials (5) oder der Vorform in ein wenigstens bereichsweise gekühltes Presswerkzeug,
• Warmumformen des Blechmaterials oder der Vorform nach dem Erwärmen,
• Presshärten (8) des erwärmten Blechmaterials oder der erwärmten Vorform zum Kraftfahrzeugbauteil,
**dadurch gekennzeichnet, dass**
das Erwärmen (7) des Blechmaterials (1) in einem Innenraum einer Heizeinrichtung unter Umgebungsluftbedingungen durchgeführt wird, und der Innenraum eine Temperatur aufweist, die zwischen 50 Kelvin und 350 Kelvin oberhalb der Austenitisierungstemperatur der Mittellage (3) des Blechmaterials (1) eingestellt wird.

2. Verfahren nach einem der vorherigen Ansprüche, **dadurch gekennzeichnet, dass** gleichzeitig mehrere Blechmaterialien (1) oder Vorformen in der Heizeinrichtung erwärmt werden.

3. Verfahren nach einem der vorherigen Ansprüche, **dadurch gekennzeichnet, dass** das Erwärmen (7) des Blechmaterials (1) oder der Vorform in einer Zeit durchgeführt wird, welche für Blechmaterial (1) mit einer Gesamtdicke (T) von 0,7 bis 1,5 mm zwischen 60 s und 180 s sowie für Blechmaterial (1) mit einer Gesamtdicke (T) von 1,6 bis 3,0 mm zwischen 90s und 270 s beträgt.

4. Verfahren nach einem der vorherigen Ansprüche, **dadurch gekennzeichnet, dass** das Blechmaterial (1) hergestellt wird durch ein Schmiedeverfahren, oder ein heißisostatisches Pressverfahren, oder ein Warmwalzverfahren oder ein Auftragsschweißverfahren.

5. Verfahren nach einem der vorherigen Ansprüche, **dadurch gekennzeichnet, dass** das Kraftfahrzeugbauteil mechanisch bearbeitet, insbesondere endbeschnitten und/oder gelocht, bevorzugt hartbeschnitten wird.

6. Verfahren nach einem der vorherigen Ansprüche, **dadurch gekennzeichnet, dass** das Blechmaterial (1) eine Mittellage (3) aus einer Stahllegierung umfassend Kohlenstoff zwischen 0,07 und 0,45 Gew.-% und Bor zwischen 0,0005 und 0,0100 Gew.-% aufweist.

7. Verfahren nach einem der vorherigen Ansprüche, **dadurch gekennzeichnet, dass** das Blechmaterial (1) eine Außenlage (2, 4) aus einer ferritisch, rostfreien Stahllegierung, insbesondere einer zunderbeständigen Legierung, folgende Legierungsbestanteile in Gewichtprozent (Gew.-%) umfasst:
• Kohlenstoff (C): 0,08 % bis 0,16 %
• Silizium (Si): 0,5 % bis 1,8 %
• Mangan (Mn): 0,8 % bis 1,4 %
• Chrom (Cr): 13,0 % bis 22,0 %
• Aluminium (Al): 0,5 % bis 1,5 %
• Phosphor (P): maximal 0,06 %
• Schwefel (S): maximal 0,02 %
Rest Eisen (Fe) und erschmelzungsbedingten Verunreinigungen.

8. Verfahren nach einem der vorherigen Ansprüche, **dadurch gekennzeichnet, dass** eine der Außenlagen(2, 4) eine Dicke kleiner 20%, insbesondere kleiner 10% der Gesamtdicke (T) des Blechmaterials (1) aufweist.

9. Verfahren nach einem der vorherigen Ansprüche, **dadurch gekennzeichnet, dass** ein Blechmaterial (1) ohne metallische Beschichtung eingesetzt wird.

10. Verfahren nach einem der vorherigen Ansprüche, **dadurch gekennzeichnet, dass** ein Blechmaterial (1) verwendet wird, welches durch ein Verfahren zum flexiblen Walzen hergestellt wurde und Bereiche reduzierter Blechdicke aufweist.
